**Europäisches Patentamt**

**European Patent Office**

**Office européen des brevets**

(11) Veröffentlichungsnummer: **0 141 964**
**A1**

# EUROPÄISCHE PATENTANMELDUNG

(21) Anmeldenummer: **84110861.6**

(22) Anmeldetag: **12.09.84**

(51) Int. Cl.⁴: **G 01 S 5/16, G 01 S 1/70**

(30) Priorität: **25.10.83 CH 5769/83**

(43) Veröffentlichungstag der Anmeldung: **22.05.85**
**Patentblatt 85/21**

(84) Benannte Vertragsstaaten: **AT BE DE FR GB IT NL**

(71) Anmelder: **INVENTIO AG, Seestrasse 55, CH-6052 Hergiswil NW (CH)**

(72) Erfinder: **Helz, Ulrich, Dipl.-Ing., Staatsstrasse 94, CH-3044 Säriswil (CH)**

(54) **Einrichtung für ortsbewegliche, ebenegebundene Objekte zur Selbstbestimmung ihrer Lagekoordinaten und Richtungswinkel.**

(57) Diese Selbstortungseinrichtung enthält zwei Lichtstrahlen (7, 8), die den Bewegungsbereich M, von z.B. führerlosen Fahrzeugen (F), durch horizontale Schwenkbewegungen um zwei stationäre Referenzpunkte U, V abtasten und mit zwei omnidirektionalen Lichtempfängern (A, B) auf jedem Fahrzeug (F) zusammenwirken. Zur Berechnung der Lagekoordinaten $(X_p, Y_p)$ sowie des Richtungswinkels ($\lambda$) werden Winkel ($\alpha_A$, $\alpha_B$, $\beta_A$, $\beta_B$) mit einer bekannten Distanz ($\overline{UV}$) in einem fahrzeuggestützten Prozessor (41) trigonometrisch verknüpft. Die Ermittlung der Winkel erfolgt berührungslos, ohne Verwendung von Drehtischen oder Winkelkodierern. Hierzu werden mit dem Zeitmesser (27) die Schwenkzeiten $\triangle t_1$, $\triangle t_2$, $\triangle t_3$ und $\triangle t_4$ gemessen, welche die Lichtstrahlen (7, 8) benötigen, um aus den O-Grad-Kanten (13, 14) zu den fahrzeuggestützten Empfängern (A, B) zu schwenken und daraus, in Verbindung mit der Winkelgeschwindigkeit ($\omega_o$), im Prozessor (41) die Winkelgrade berechnet. Über kodierte omnidirektionale Synchronisationssignale (31, 32) vom Synchronisationssender (19) zum fahrzeuggestützten Synchronisationsempfänger (20), wird der Zeitmesser (27) mit den schwenkbaren Lichtstrahlen (7, 8) synchronisiert. Die vorliegende Selbstortungseinrichtung (23) ermöglicht ebenegebundenen Fahrzeugen (F) sich laufend selbst zu vermessen und dadurch in ihrem Bewegungsbereich (M) autonom und automatisch zu navigieren. Wirtschaftlichkeit und Kostenvorteile zeigen sich insbesondere bei einer Vielzahl von Fahrzeugen (F). Damit ausgerüstete Flachlager sind — z.B. über ein Computerterminal — voll rekonfigurierbar.

0141964

— 1 —

<u>Einrichtung für ortsbewegliche, ebenegebundene Objekte</u>
<u>zur Selbstbestimmung ihrer Lagekoordinaten und Rich-</u>
<u>tungswinkel</u>

Die vorliegende Erfindung betrifft eine Einrichtung für ortsbewegliche, ebenegebundene Objekte zur Selbstbestimmung ihrer Lagekoordinaten und Richtungswinkel bezüglich eines Referenzpunktes bzw. einer Referenzgeraden enthaltend mindestens eine ortsfeste, den Bewegungsbereich der Objekte mit einem gebündelten Strahl in der Art eines Leuchtturmes abtastende Strahlenquelle bekannter Lage sowie auf jedem Objekt omnidirektionale Strahlenempfänger in Verbindung mit einem Prozessor zur trigonometrischen Verknüpfung von Winkeln und Distanzen. Solche Selbstortungseinrichtungen sind allgemein anwendbar, wenn es um die Richtungssteuerung ebenegebundener Objekte geht, wie z.B. bei der autonomen und automatischen Zielansteuerung durch führerlose Fahrzeuge.

Es sind verschiedene Einrichtungen und Verfahren bekannt, um führerlosen, ebenegebundenen Fahrzeugen zu ermöglichen, ihre Lagekordinaten und Richtungswinkel bezüglich eines Referenzpunktes bzw. einer Referenzgeraden selbst zu bestimmen.

So ist z.B. in der EU-Patentanmeldung Nr. 0 007 790 ein führerloses Fahrzeug beschrieben, das von mindestens 3 auf ihm stationär montierten und dreieckförmig angeordneten omnidirektionalen Lichtempfängern sowie einem fahrzeuggestützten Prozessor gesteuert wird. Hiezu ist ausserhalb des Fahrzeuges ortsfest eine Strahlenquelle angebracht, die einen Lichtstrahl aussendet, der sich um eine vertikale Achse dreht und dadurch den Verkehrsbereich des Fahrzeuges mit kreisförmigen horizontalen Schwenkbewegungen abtastet. Dieser Lichtstrahl ist hinsichtlich seiner auf eine Referenzgerade bezogenen Winkellage gekennzeichnet, z.B. durch Modulation, so dass bei seinem Empfang durch die 3 Lichtempfänger die jeweiligen Winkellagen gemessen werden können. Bekannt sind andererseits aber auch die Lagekoordinaten der den Lichtstrahl aussendenden Strahlenquelle sowie die Distanzen und Winkel zwischen den dreieckförmig auf dem Fahrzeug angeordneten Lichtempfängern. Es ist dann dem fahrzeuggestützten Prozessor leicht möglich, durch trigonometrische Verknüpfung von gemessenen bzw. bekannten Systemgrössen die Lagekoordinaten und den Richtungswinkel für das führerlose Fahrzeug zu berechnen. Diese Selbstortung wird vom Fahrzeug fortlaufend, also auch während seiner Fahrt ausgeführt, wobei die Lagekoordinaten und der Richtungswinkel auf die Strahlenquelle bzw. eine Referenzgerade bezogen sind. Das Fahrzeug ist so in der Lage, in dem vom Lichtstrahl abgetasteten Verkehrsbereich zu navigieren und vorgegebene Zielpunkte autonom und automatisch anzusteuern. Der wesentliche Nachteil dieser Selbstortungseinrichtung besteht im erhöhten Aufwand, wie er für die winkelkonforme Kennzeichnung des rotierenden Lichtstrahles notwendig ist. In der Strahlenquelle bedingt dies einen Winkelkodierer, der den rotierenden Lichtstrahl in Funktion seiner Winkellage kodiert. Auf dem Fahrzeug ist für jeden der 3 Lichtempfänger eine entsprechende Dekodierschaltung erforderlich, ein Aufwand, der sich für jedes verwendete Fahrzeug wiederholt. Im weitern dient der rotierende Lichtstrahl nicht bloss der Abtastung des Verkehrsbereiches sondern auch der Datenübertragung von der Strahlenquelle zu den einzelnen Lichtempfängern auf dem Fahrzeug. Der Lichtstrahl muss deshalb gewissen Qualitätsanforderungen genügen, wie sie sich aus seiner Funktion als Datenkanal ergeben und insbesondere gegen Störbeeinflussungen ausreichend gesichert sein. Im weitern ist unter der internationalen Veröffentlichungsnummer WO 82/01420 eine PCT-Anmeldung für eine Anlage zur Ermittlung der Bewegungskoordinaten (Lagekoordinaten, Richtungswinkel) eines ortsbeweglichen Körpers bekannt, bei welcher ausserhalb des Bewegungsbereiches zwei fest angebrachte Reflektoreinrichtungen verwendet werden, deren Lagen bezüglich eines festgelegten Koordinatensystems bekannt sind. Auf dem ortsbeweglichen Körper, z.B. einem Fahrzeug, sind in bestimmtem horizontalem Abstand voneinander zwei optische Winkel- und Distanzmesseinrichtungen vorgesehen, die beide je einen Lichtsender und einen Lichtempfänger aufweisen und mittels eines Drehantriebes um eine vertikale Achse drehbar sind. Zur Messung von Winkeln und Distanzen richten sich die Winkel- und Distanzmesseinrichtungen mittels Zielsuche selbsttätig auf je eine der beiden Reflektoreinrichtungen aus, wobei der Messstrahl als Suchstrahl verwendet wird. Winkel werden berührungslos mittels Winkelkodierer, Distanzen elektronisch aufgrund der Laufzeiten ausgesandter und reflektierter Lichtwellen gemessen. Die Berechnung der Lagekoordinaten des Fahrzeugstandortes sowie des Richtungswinkels der Fahrzeugorientierung bezüglich eines festgelegten Koordinatensystems bzw. einer Referenzgeraden erfolgt durch trigonometrische Verknüpfung von z.B. zwei Winkeln und einer Distanz. Die grundlegenden Nachteile einer solchen Selbstortungseinrichtung ergeben sich aus dem Umstande, dass mit Ausnahme zweier passiver Reflektoren die gesamte apparative Ausstattung auf dem ortsbeweglichen Fahrzeug konzentriert ist, dessen Bewegungskoordinaten bestimmt werden sollen. Dies bedeutet, dass elektronische und mechanische Bauteile wie z.B. optoelektronische Elemente oder um eine vertikale Achse schwenkbare Drehtische, dem rauhen Betrieb und den Störeinflüssen ausgesetzt sind, wie sie auf einem ortsbeweglichen führerlosen Fahrzeug anzutreffen sind. Zum einen beeinträchtigt dies die Zuverlässigkeit und Sicherheit einer mit einer derartigen Selbstortungseinrichtung ausgerüsteten Fahrzeugsteuerung und erschwert zudem deren Unterhalt. Zum andern wird dadurch die Genauigkeit der Selbstortungseinrichtung und insbesondere deren Langzeitbeständigkeit negativ beeinflusst. Im weiteren ist die mit Ausnahme zweier Reflektoren vollständig auf dem Fahrzeug konzentrierte Selbstortungseinrichtung wegen ihres doch recht komplizierten Aufbaues, der z.B. zwei schwenkbare Drehtische enthält, fest in den Fahrzeugaufbau integriert. Sie ist deshalb nicht leicht und rasch auswechselbar, wie dies z.B. bei bloss steckbarer Montage möglich wäre. Jedes Fahrzeug muss demnach permanent mit einer im wesentlichen vollständigen Selbstortungseinrichtung ausgerüstet sein, auch wenn sich gleichzeitig nur ein Fahrzeug im Bewegungsbereich befindet. Es sind also gleichviele Selbstortungseinrichtungen erforderlich wie Fahrzeuge vorhanden sind, was einen wirtschaftlichen Einsatz einer derartigen Selbstortungseinrichtung bei grossen Förderanlagen mit einer Vielzahl von Fahrzeugen unmöglich macht.

Die Erfindung, wie sie in den Ansprüchen gekennzeichnet ist, löst die Aufgabe, eine einfache und betriebssichere Selbstortungseinrichtung zu schaffen, welche ortsbeweglichen, ebenegebundenen Objekten ermöglicht, ihre Lagekoordinaten und Richtungswinkel laufend, also auch während ihrer Bewegung, zu bestimmen und im Bewegungsbereiche oder in dessen Boden keine Installationen erforderlich macht. Die Neuerung bezweckt ferner, eine Selbstortungseinrichtung derart zu gestalten, dass sie für den rauhen Einsatz im Zusammenhang mit führerlosen Fahrzeugen geeignet ist, und sich insbesondere in grossen Förderanlagen mit einer Vielzahl von Fahrzeugen wirtschaftlich anwenden lässt. Im weitern soll sich die Selbstortung durch hohe Genauigkeit auszeichnen, so dass die ermittelten Lagekoordinaten und Richtungswinkel als Stellgrössen direkt in die Regelkreise für Spurführung und Zielansteuerung eingegeben werden können.

Die grundlegenden, mit der Erfindung erzielten Vorteile ergeben sich im wesentlichen aus dem Umstande, dass der Bewegungsbereich der Fahrzeuge vollkommen frei ist von die antragsgemässe Neuerung betreffenden Installationen, die alle auf den Fahrzeugen oder ausserhalb ihres Bewegungsbereiches angeordnet sind.

Die erfindungsgemässe Selbstortungseinrichtung zeichnet sich deshalb durch Flexibilität und Vielfalt in ihrer Anwendung aus. Dies zeigt sich insbesondere bei Flachlagern, die bekanntlich keine der Lagerung dienende Vorrichtungen wie Unterlagen, Böcke und Gestelle aufweisen und deren Lagerboden demnach frei ist von irgendwelchen Installationen. In einem solchen Flachlager, dessen Fördermittel mit Hilfe der erfindungsgemässen Neuerung gesteuert sind, lassen sich Lagerplätze und Verkehrswege beliebig verlegen und das Lager dadurch an die wechselnden Anforderungen und Strategien des Lagerbetriebes anpassen. Und weil diese Anpassungen leicht und rasch vorgenommen werden können, lassen sie sich in den normalen Lagerbetrieb integrieren. Ein derart gestaltetes Flachlager ist demnach - z.B. über ein Computerterminal in der zentralen Anlagensteuerung - voll rekonfigurierbar. In gleicher Weise sind auch längerfristige Umstellungen möglich, wenn es z.B. darum geht, Flachlager an bauliche Veränderungen anzupassen oder den Lagerboden ganz oder teilweise anderweitig zu nutzen, z.B. als Fabrikationsfläche. Dadurch wird eine bessere Nutzung des im Lagerbereiche meist sehr knappen Lagerbodens möglich. Weitere Vorteile ergeben sich daraus, dass alle störanfälligen oder die Genauigkeit der Selbstortung bestimmenden Teile ortsfest montiert sind. Dies gewährleistet erhöhte Zuverlässigkeit und Sicherheit für die erfindungsgemässe Neuerung und erleichtert damit deren Unterhalt und Service. Auch hat es sich als vorteilhaft erwiesen, dass die neuartige Selbstortungseinrichtung aufgrund ihrer hohen Genauigkeit in der Lage ist, zwischen sehr nahe beieinander liegenden Koordinaten- und Winkelwerten zu
differenzieren und dadurch den Bewegungsbereich der
Fahrzeuge mit hohem Auflösungsvermögen koordinatenmässig zu unterteilen. Die antragsgemässe Neuerung
eignet sich deshalb vorzüglich für die Steuerung
ebenegebundener präzise arbeitender Roboter sowie
autonomer Förderzeuge zur Lagerung kleiner Lasteinheiten. Im weitern ist die erfindungsgemäss aufgebaute
Selbstortungseinrichtung bausteinmässig so aufgeteilt,
dass der grössere Teil der Anlage mit den teuren und
kritischen Bauelementen ausserhalb des Bewegungsbereiches der Fahrzeuge angeordnet ist, also ungeachtet der
Anzahl Fahrzeuge, nur in einfacher Ausführung notwendig
ist. Die auf den einzelnen Fahrzeugen vorgesehenen
Bausteine, die also entsprechend der Anzahl Fahrzeuge
in mehrfacher Ausführung vorhanden sind, stellen den
kleineren Teil der Anlage dar, mit einfachen und
unkritischen Komponenten. Da zudem keine Anforderungen
an den Boden des Bewegungsbereiches gestellt sind,
zeigen sich Wirtschaftlichkeit und Kostenvorteil einer
derart gestalteten Selbstortungseinrichtung insbesondere
bei grossen Anlagen mit einer Vielzahl von Fahrzeugen.

Die Erfindung wird nachstehend in ihrer Anwendung beim
automatischen Betrieb dynamischer Flachlager beschrieben, wie sie sich aus der Zwischenlagerung palettierter Lasteinheiten auf der LKW-Rampe eines grossen Verteilzentrums ergibt, jedoch ist das hier zugrunde liegende Prinzip allgemein in der Lager- und Fördertechnik anwendbar. In der lediglich dieses Anwendungsbeispiel der Erfindung darstellenden Zeichnung zeigen:

Fig. 1 u. 2      schematisch im Grundriss und im Aufriss ein Fahrzeug in seinem Bewegungsbereich M z.B. einem als LKW-Verladerampe dienenden Flachlager, zur Darstellung der Funktionsweise der Selbstortungseinrichtung,

Fig. 3      ein schematisches Blockschaltbild des auf jedem Fahrzeug stationär montierten Teiles der Selbstortungseinrichtung,

Fig. 4a u. 4b      eine graphische Darstellung der trigonometrischen Beziehungen für die Ermittlung der Lagekoordinaten und des Richtungswinkels ebenegebundener Fahrzeuge,

Fig. 5      ein schematisches Blockschaltbild einer möglichen Ausführung des ausserhalb des Bewegungsbereiches M ortsfest montierten Teiles der erfindungsgemässen Selbstortungseinrichtung.

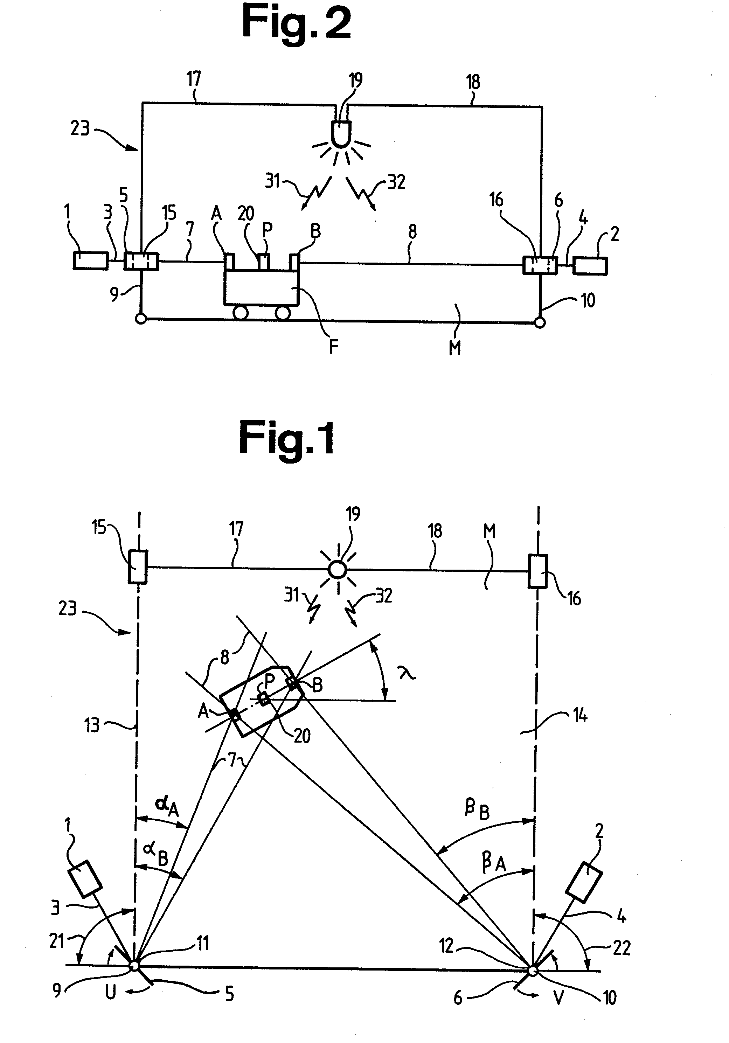

Fig. 1 und Fig. 2 zeigen im Grundriss bzw. im Aufriss eine Disposition jenes Teiles der Selbstortungseinrichtung 23, der ausserhalb des Bewegungsbereiches M des Fahrzeuges F angeordnet ist. Dazu gehören in erster Linie zwei ortsfeste Lichtquellen 1, 2 deren stationäre Lichtstrahlen 3, 4 durch Reflexion an zwei rotierenden Spiegeln 5, 6 in zwei, den Bewegungsbereich M abtastende schwenkbare Lichtstrahlen 7, 8 umgelenkt sind. Die Rotationsachsen 9, 10 für die rotierenden Spiegel 5, 6 sind in den Referenzpunkten U, V vertikal angeordnet, so dass sich für die beiden schwenkbaren Lichtstrahlen 7, 8 horizontale Abtastbereiche ergeben, die von den 0-Grad-Kanten 13, 14 bis zur Verbindungsgeraden $\overline{UV}$ reichen. Im Schwenkbereich der Lichtstrahlen 7, 8 sind in den Winkellagen 21, 22 der 0-Grad-Kanten 13, 14 Lichtsensoren 15, 16 angebracht, die über die Leitungen 17, 18 mit dem omnidirektionalen Synchronisationssender 19 verbunden sind. Dieser Synchronisationssender 19 ist so über dem Bewegungsbereich M plaziert, dass er denselben vollständig ausleuchtet und demnach den Synchronisationsempfänger 20 auf dem Fahrzeug F in jeder Fahrzeugposition sicher erreichen kann.

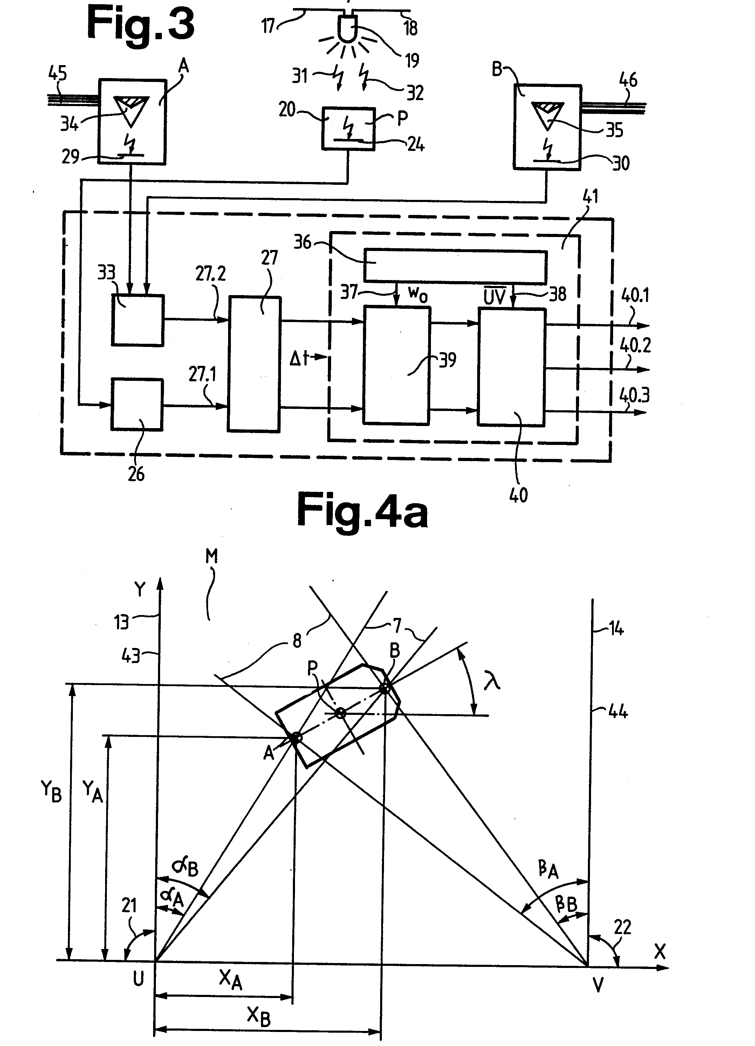

Die Fig. 3 zeigt als schematisches Blockschaltbild jenen Teil der Selbstortungseinrichtung 23, der auf jedem Fahrzeug F angeordnet ist. Das Fotoelement 24 im omnidirektionalen Synchronisationsempfänger 20 ist mit einem Synchronisationsdekoder 26 verbunden, dessen Ausgang an den Eingang 27.1 des Zeitmessers 27 geführt ist. In gleicher Weise sind die Fotoelemente 29, 30 in den beiden Lichtempfängern A bzw. B über den Lichtstrahldekoder 33 an den Eingang 27.2 des Zeitmessers 27 geführt.

Der Speicher 36 enthält die Winkelgeschwindigkeit $\omega_0$ und die Distanz $\overline{UV}$, die beide als Systemkonstante gespeichert sind und ist über die Verbindungen 37 und 38 mit dem Winkelrechner 39 bzw. dem Koordinaten- und Richtungsrechner 40 verbunden. Der Winkelrechner 39 dient als Verbindungsglied vom Zeitmesser 27 zum Koordinaten- und Richtungsrechner 40, an dessen Ausgängen 40.1, 40.2, 40.3 die Lagekoordinaten $X_p$, $Y_p$ bzw. der Richtungswinkel $\lambda$ zur Einspeisung in die Spur- und Zielansteuerung zur Verfügung steht.

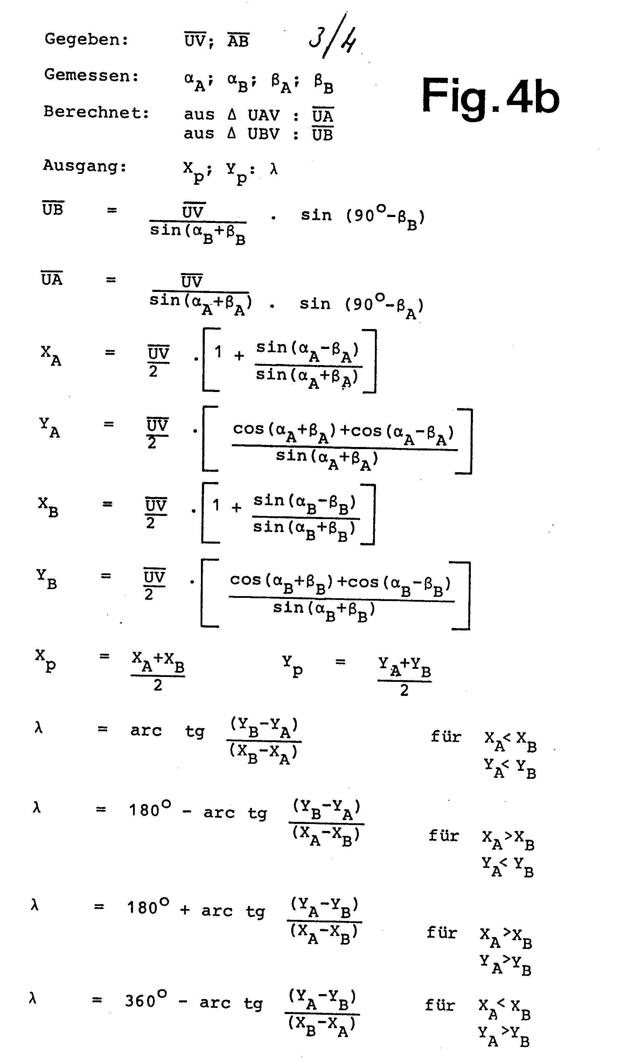

Eine Darstellung der geometrischen Dreiecksbeziehungen für die Ermittlung der Lagekoordinaten $X_p$, $Y_p$ sowie des Richtungswinkels $\lambda$ eines Fahrzeuges F im Verkehrsbereich M ist in den Fig. 4a und 4b enthalten. Von den Referenzpunkten U, V gehen zwei schwenkbare Lichtstrahlen 7, 8 aus, die den Bewegungsbereich M nicht gleichzeitig sondern nacheinander abtasten. Die Geraden 43, 44 durch die Referenzpunkte U, V stehen rechtwinklig auf der Verbindungsgeraden $\overline{UV}$ und dienen als 0-Grad-Kanten 13, 14, von denen aus die Neigungswinkel $\alpha$ und $\beta$ der Lichtstrahlen 7, 8 durch eine Zeitmessung ermittelt werden. Obwohl die Lichtstrahlen 7, 8 wegen ihrer gegenseitigen Phasenverschiebung $\phi_0$ nicht gleichzeitig auf einen Lichtempfänger A, B gerichtet sind, kann aufgrund der hohen Winkelgeschwindigkeit $\omega_O$ vereinfachend angenommen werden, dass sich die Lichtstrahlen 7, 8 in A und B treffen und so mit der Verbindungsgeraden $\overline{UV}$ zwei allgemeine Dreiecke bilden mit den Eckpunkten U, V, A bzw. U, V, B und den Winkeln $(90^O-\alpha_A)$; $(90^O-\beta_A)$; $(\alpha_A+\beta_A)$ bzw. $(90^O-\alpha_B)$, $(90^O-\beta_B)$, $(\alpha_B+\beta_B)$. Mit Hilfe des Sinussatzes ist in diesen Dreiecken aus drei bekannten Elementen das entsprechende Vierte berechenbar. Mit der Verbindungsgeraden $\overline{UV}$ als X-Achse sowie der auf ihr rechtwinklig stehenden Geraden 43 als Y-Achse ist bezüglich der beiden Referenzpunkte U, V ein kartesisches Koordinatensystem definiert, mit U als Nullpunkt. Die Lagekoordinaten $(X_A, Y_A, X_B, Y_B)$ der Lichtempfänger A, B sowie der Richtungswinkel $\lambda$ der Fahrzeuglängsachse sind auf dieses Koordinatensystem bzw. dessen X-Achse bezogen. Der entsprechende Rechnungsgang ist aus Fig. 4b ersichtlich. Selbstverständlich kann die Selbstortung mittels Koordinatentransformation auf jedes andere Koordinatensystem bezogen werden.

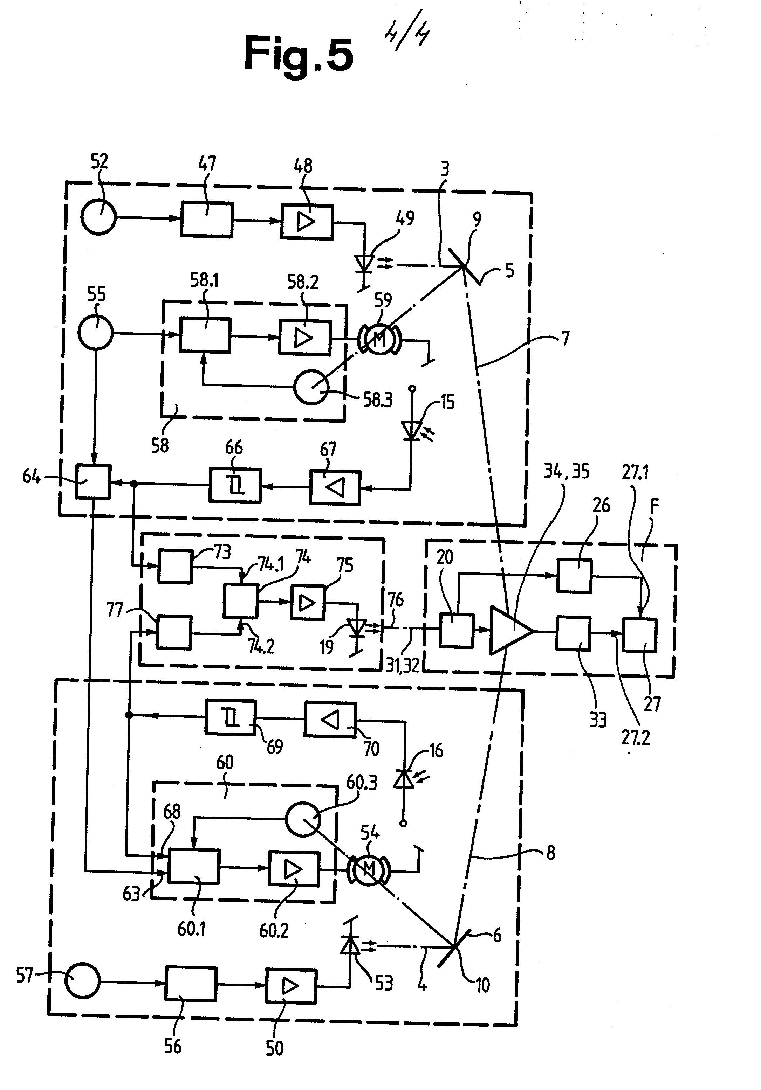

In Fig. 5 ist ein Kodegenerator 52 mit einem Pulsgenerator 47 verbunden, der über einen Pulsverstärker 48 die lichtemittierende Diode 49 aussteuert und so den stationären Lichtstrahl 3 erzeugt. In gleicher Weise sind ein Kodegenerator 57, ein Pulsgenerator 56 sowie ein Pulsverstärker 50 an die lichtemittierende Diode 53 angeschlossen, von welcher der stationäre Lichtstrahl 4 ausgeht. Kernstück der optischen Abtasteinrichtung sind zwei um je eine vertikale Achse 9, 10 drehbare Spiegel 5, 6 an welchen die stationären Lichtstrahlen 3, 4 reflektiert werden. Als Antrieb für den Spiegel 5 dient der Gleichstrommotor 59, der von einem die Drehzahl $\omega_o/2$ bestimmenden Frequenzgenerator 55 über einen Regelkreis 58 mit Regler 58.1, Verstärker 58.2 und Rückführtacho 58.3 angesteuert ist. In gleicher Weise ist der Spiegel 6 durch den Gleichstrommotor 54 angetrieben. Der entsprechende Regelkreis 60 enthält den Regler 60.1, den Verstärker 60.2 sowie den Rückführtacho 60.3. Zur Eingabe des drehzahlbestimmenden Signales ist der Eingang 63 des Reglers 60.1 an den Phasenschieber 64 angeschlossen, dessen erster Eingang mit dem Frequenzgenerator 55 verbunden ist und dessen zweiter Eingang über den Pulsformer 66 und den Verstärker 67 mit dem Sensor 15 in Verbindung steht. Am Eingang 68 ist der Regler 60.1 über den Pulsformer 69 und den Verstärker 70 mit dem Sensor 16 verbunden. Zur Synchronisation des Zeitmessers 27 auf dem Fahrzeug F mit dem schwenkbaren Lichtstrahl 7 ist der Sensor 15 über den Verstärker 67 und den Pulsformer 66 an den Kodegenerator 73 angeschlossen, dessen Ausgang auf den Eingang 74.1 des Pulsgenerators 74 geführt ist und über den Pulsverstärker 75 mit dem Synchronisationssender 19 in Verbindung steht. Dieser ist so über dem Bewegungsbereich M angeordnet, dass

- 14 -

das von ihm ausgesandte Licht über einen Pfad 76 den Synchronisationsempfänger 20 in jeder Fahrzeugposition erreichen kann. Eine analoge Verbindung führt vom Sensor 16 über Verstärker 70, Pulsformer 69, Kodegenerator 77 zum Eingang 74.2 des Pulsgenerators 74 und von diesem über den Pulsformer 75 zum Synchronisationssender 19 zwecks Synchronisation des Zeitmessers 27 mit dem schwenkbaren Lichtstrahl 8.

Zur Erläuterung der Funktionsweise einer erfindungsgemäss gestalteten Selbstortungseinrichtung sei auf die Figuren 1 bis 4 hingewiesen.

Vorerst ist aus den Figuren 1 und 2 ersichtlich, dass die aus den ortsfesten Lichtquellen 1, 2 austretenden stationären Lichtstrahlen 3, 4 an, mit der Winkelgeschwindigkeit $\omega_0/2$ rotierenden Spiegeln 5, 6 reflektiert werden und dadurch als bewegliche Lichtstrahlen 7, 8 den Bewegungsbereich M in der Art eines Leuchtturmlichtes mit $\omega_0$ horizontal abtasten. So schwenkt z.B. der bewegliche Lichtstrahl 7 von der als Referenzlage dienenden 0-Grad-Kante 13 im Uhrzeigersinn auf das Fahrzeug F und von da weiter zum Referenzpunkt V. Dabei sendet der in der Winkellage der 0-Grad-Kante 13 angebrachte Lichtstrahlsensor 15 mittels des Synchronisationssenders 19 ein kodiertes Synchronisationssignal 31 zum Fahrzeug F, wenn der Lichtstrahl 7 mit der 0-Grad-Kante 13 zusammenfällt. In gleicher Weise wirkt der Lichtstrahlsensor 16,

- 15 -

wenn der Lichtstrahl 8 die 0-Grad-Kante 14 passiert.
Ausgehend von den beiden kodierten Synchronisationssignalen 31, 32, die als Zeitmarken für den Zeitmesser 27 dienen, werden die Schwenkzeiten $\Delta t_1$, $\Delta t_2$, $\Delta t_3$ und $\Delta t_4$ gemessen, welche die Lichtstrahlen 7, 8 benötigen, um von ihren 0-Grad-Kanten 13 bzw. 14 auf die omnidirektionalen Lichtempfänger A bzw. B zu schwenken. Daraus, und mit Hilfe der als Systemkonstante gespeicherten Winkelgeschwindigkeit $\omega_O$ werden die Richtungswinkel $\alpha_A$, $\alpha_B$, $\beta_A$, $\beta_B$ berechnet, welche durch trigonometrische Verknüpfung mit der Distanz $\overline{UV}$ zu den Positionskoordinaten $X_A$, $Y_A$, $X_B$, $Y_B$ und dem Richtungswinkel $\lambda$ führen. Aufgrund des Systemaufbaues dürfen nicht gleichzeitig beide Lichtstrahlen 7, 8 auf einen Empfänger A, B gerichtet sein, oder beide Sensoren 15, 16 den Synchronisationssender 19 gleichzeitig ansteuern. Die beiden mit $\omega_O/2$ rotierenden Spiegel 5, 6 sind deshalb in ihrer Winkellage so um $\phi_O$ gegeneinander phasenverschoben, dass sich die Lichtstrahlen 7, 8 nicht gleichzeitig im Bewegungsbereich M befinden können.
Anhand der Fig. 3 sind im folgenden jene Funktionen erläutert, die dem auf dem Fahrzeug F konzentrierten Teil der Selbstortungseinrichtung 23 zugeordnet sind.
Das beim Durchgang des Lichtstrahles 7 durch die 0-Grad-Kante 13 vom Synchronisationssender 19 ausgestrahlte Synchronisationssignal 31 wird vom Fotoelement 24 im Synchronisationsempfänger 20 aufgenommen und an den Synchronisationsdekoder 26 weitergeleitet.
Von hier gelangt das Synchronisationssignal 31 via
Eingang 27.1 in den Zeitmesser 27, der es aufgrund
seiner Kodierung als erste Zeitmarke dem Lichtstrahl 7
zuordnet. An den Reflektoren 34, 35 wird der auf die
Lichtempfänger A, B gerichtete Lichtstrahl 7 so
abgelenkt, dass er ungeachtet seines horizontalen
Einfallwinkels stets auf die Fotoelemente 29, 30 zu
liegen kommt, was die omnidirektionale Funktion der
Lichtempfänger A, B sicherstellt. Von hier gelangen
die vom schwenkbaren Lichtstrahl 7 in A und B ausgelösten Signale über den Lichtstrahldekoder 33 und den
Eingang 27.2 in den Zeitmesser 27, der sie aufgrund
ihrer Kodierung der ersten Zeitmarke zuordnet und
daraus die Schwenkzeiten $\Delta t_1$, $\Delta t_2$ bestimmt. Im Winkelrechner 39 werden $\Delta t_1$ und $\Delta t_2$ mit der vom Speicher 36
als erste Systemkonstante zugeführten Winkelgeschwindigkeit $\omega_O$ verknüpft und die Richtungswinkel $\alpha_A$ und $\alpha_B$
berechnet. In analoger Weise ergeben sich aus der
Schwenkbewegung des Lichtstrahles 8 die Richtungswinkel
$\beta_A$ und $\beta_B$. Als letzte Funktion werden im Koordinaten- und
Richtungsrechner 40 die Richtungswinkel $\alpha_A$, $\alpha_B$ bzw. $\beta_A$,
$\beta_B$ mit der vom Speicher 36 als zweite Systemkonstante
zugeführten Distanz $\overline{UV}$ trigonometrisch verknüpft und
daraus gemäss den in Fig. 4 dargestellten Beziehungen
die Lagekoordinaten $X_P$, $Y_P$ und der Richtungswinkel $\lambda$
berechnet. Aus den Fig. 2 und 3 ist ersichtlich, dass der Koordinaten- und Richtungsrechner 40 die Lagekoordinaten $X_P$, $Y_P$ und den Richtungswinkel $\lambda$ als Funktion von $\overline{UV}$; $\alpha_A$, $\alpha_B$, $\beta_A$, $\beta_B$ berechnet. $\overline{UV}$ ist als Distanz zwischen den beiden ortsfesten Referenzpunkten U, V eine Systemkonstante und mit hoher Genauigkeit im Speicher 36 abgespeichert. $\alpha$ und $\beta$ werden durch die Winkelgeschwindigkeit $\omega_O$ und die Schwenkzeiten $\Delta t$ bestimmt, die beide eine hohe Genauigkeit aufweisen: die Winkelgeschwindigkeit $\omega_O$, weil der Antrieb für die Spiegel 5, 6 gemäss Fig. 5 geregelt und ortsfest montiert ist, die Schwenkzeiten $\Delta t_1$, $\Delta t_2$, $\Delta t_3$, und $\Delta t_4$, weil sich die Zeit mit einfachen Mitteln sehr genau messen lässt. Die hohe Genauigkeit der vorliegenden Selbstortungseinrichtung 23 ist demnach darin begründet, dass sie die Grössen, welche die Lagekoordinaten $X_P$, $Y_P$ sowie den Richtungswinkel $\lambda$ bestimmen als Systemkonstante gespeichert hat, oder sehr genau misst und berechnet.

Die Funktionen, welche vom ortsfest, ausserhalb des Bewegungsbereiches M, montierten Teil der Selbstortungseinrichtung 23 ausgeführt werden, sind aus dem Blockschaltbild der Fig. 5 ersichtlich. Es betrifft dies die Erzeugung, Umlenkung und Synchronisation der schwenkbaren Lichtstrahlen 7, 8. Bei der Erzeugung des stationären Lichtstrahles 3 wird seine Pulsfrequenz vom Kodegenerator 52 festgelegt und als Kennung für den Lichtstrahl 3, 7 verwendet. In gleicher Weise dient die durch den Koder 57 bestimmte Pulsfrequenz als Kennung für den Lichtstrahl 4, 8. Zur Umlenkung der schwenkbaren Lichtstrahlen 7, 8 werden die stationären Lichtstrahlen 3, 4 an den rotierenden Spiegeln 5, 6 reflektiert, deren Antrieb mit konstanter Winkelgeschwindigkeit $\omega_o/2$ und gegenseitiger Phasenverschiebung $\phi_o$ nach dem Master-Slave-Prinzip erfolgt. Dadurch ist die gegenseitige Synchronisation der rotierenden Lichtstrahlen 7, 8 gewährleistet. Ihr absoluter Gleichlauf hinsichtlich Frequenz und Phase ist wichtige Voraussetzung für die genaue Funktion der antragsgemässen Selbstortungseinrichtung. Zur Messung der Schwenkzeiten $\Delta t_1$, $\Delta t_2$, $\Delta t_3$ und $\Delta t_4$ muss der Zeitmesser 27 mit den Lichtstrahlen 7, 8 synchronisiert werden. Hiezu wird von den Sensoren 15, 16 auf den 0-Grad-Kanten 13, 14 der ihnen gemeinsame Synchronisationssender 19 angesteuert, der kodierte Synchronisationssignale 31, 32 über den Pfad 76 zum Synchronisationsempfänger 20 sendet und so dem Zeitmesser 27 mitteilt, wann die rotierenden Lichtstrahlen 7, 8 die entsprechenden 0-Grand-Kanten 13, 14 passiert haben. Diese kodierten Synchronisationssignale 31, 32 dienen dem Zeitmesser 27 als Zeitmarken, von denen aus die Schwenkzeiten $\Delta t_1$, $\Delta t_2$, $\Delta t_3$ und $\Delta t_4$ gemessen werden.

- 1 -

Patentansprüche :

1. Einrichtung für ortsbewegliche, ebenegebundene Objekte zur Selbstbestimmung ihrer Lagekoordinaten und Richtungswinkel bezüglich eines Referenzpunktes bzw. einer Referenzgeraden enthaltend mindestens eine ortsfeste den Bewegungsbereich (M) der Objekte (F) mit einem gebündelten Strahl (7, 8), in der Art eines Leuchtturmes, abtastende Strahlenquelle (11, 12) bekannter Lage sowie auf jedem Objekt (F) omnidirektionale Strahlenempfänger (A, B) in Verbindung mit einem Prozessor (41) zur trigonometrischen Verknüpfung von Winkeln und Distanzen

d a d u r c h   g e k e n n z e i c h n e t, dass in einer Winkellage (21, 22) mindestens eines schwenkbaren Strahles (7, 8) durch diesen betätigbar, ein, mittels eines stationären Synchronisationssenders (19) ein omnidirektionales Synchronisationssignal (31, 32) aussendender Strahlensensor (15, 16) ortsfest angebracht ist, und dass auf jedem ortsbeweglichen Objekt (F) ein Synchronisationsempfänger (20) zum Empfang des omnidirektionalen Synchronisationssignales (31, 32) mit dem Prozessor (41) verbunden ist, welcher einen, für mindestens einen schwenkbaren Strahl (7, 8) die Schwenkzeiten $\Delta t_1$, $\Delta t_2$ zwischen Strahlensensor (15, 16) und Strahlenempfänger (A, B) messenden Zeit-

0141964

- 2 -

messer (27) besitzt, sowie einen die entsprechende Winkelgeschwindigkeit ($\omega_0$) enthaltenden Speicher (36) aufweist.

2. Einrichtung nach Anspruch 1,

d a d u r c h   g e k e n n z e i c h n e t ,

dass zwei Strahlenquellen (11, 12) mit je eine Kennung aufweisenden, schwenkbaren Strahlen (7) bzw. (8) in den Referenzpunkten (U) bzw. (V) angebracht sind, und mit zwei entsprechenden, auf jedem mobilen Objekt (F) montierten Strahlenempfänger (A) bzw. (B) zusammenwirken und zwei in den Winkellagen (21, 22) ortsfest montierte Strahlensensoren (15) bzw. (16) mit einem, zwei omnidirektionale, je eine Kennung aufweisende Synchronisationssignale (31) bzw. (32) aussendenden Synchronisationssender (19) in Verbindung stehen.

3. Einrichtung nach Anspruch 2,

d a d u r c h   g e k e n n z e i c h n e t ,

dass die Kennung der Strahlen (7, 8), sowie der omnidirektionalen Synchronisationssignale (31, 32) durch unterschiedliche Pulsraten oder nach dem Prinzip der asynchronen seriellen Datenübertragung gewährleistet ist.

- 3 -

4. Einrichtung nach Anspruch 3,

   d a d u r c h   g e k e n n z e i c h n e t,

   dass die den Bewegungsbereich (M) der Objekte (F) durch horizontale Schwenkbewegungen abtastenden Strahlen (7, 8) je durch Reflexion eines stationären Strahles (3) bzw. (4) an einem, um eine Vertikalachse (9) bzw. (10) rotierenden Reflektor (5) bzw. (6) gebildet sind.

5. Einrichtung nach Anspruch 4,

   d a d u r c h   g e k e n n z e i c h n e t,

   dass die, um je eine Vertikalachse (9, 10) in den Referenzpunkten (U, V) schwenkbaren Strahlen (7, 8) mit der Winkelgeschwindigkeit ($\omega_0$) gegensinnig rotieren, und derart um den Winkel ($\phi_0$) gegeneinander phasenverschoben sind, dass sie sich nicht gleichzeitig im Bewegungsbereiche (M) oder auf den zugehörigen 0-Grad-Kanten (13, 14) befinden können.

6. Einrichtung nach Anspruch 4,

   d a d u r c h   g e k e n n z e i c h n e t,

   dass die Verbindungsgerade $\overline{UV}$ mit einer Seitenlinie eines rechteckförmigen Bewegungsbereiches (M) zusammenfällt, und die Referenzpunkte (U, V) auf den entsprechenden Eckpunkten liegen.

0141964

- 4 -

7. Einrichtung nach Anspruch 4,

dadurch gekennzeichnet,

dass die Strahlensensoren (15, 16) auf zwei, in den Referenzpunkten (U, V) rechtwinklig zu der Verbindungsgeraden $\overline{UV}$ stehenden 0-Grad-Kanten (13, 14) angebracht sind.

8. Einrichtung nach den Ansprüchen 6 oder 7,

dadurch gekennzeichnet,

dass die den Bewegungsbereich (M) der Objekte (F) durch horizontale Schwenkbewegungen abtastenden Strahlen (7, 8) gebündelte Lichtstrahlen oder Laserstrahlen sind.

9. Einrichtung nach Anspruch 8,

dadurch gekennzeichnet,

dass die Lichtstrahlen (7, 8) mittels einer vertikalen Schlitzblende als dünne Lichtbänder (45) ausgebildet sind.

10.Einrichtung nach Anspruch 8,

dadurch gekennzeichnet,

dass die Strahlen (7, 8) als vertikale, aus mehreren übereinander angeordneten parallelen Licht- oder Laserstrahlen bestehende Lichtgitter (46) ausgebildet

sind.

# Fig. 2

# Fig. 1

# Fig.3

2/4

# Fig.4a

0141964

Gegeben: $\overline{UV}$; $\overline{AB}$    3/4

Gemessen: $\alpha_A$; $\alpha_B$; $\beta_A$; $\beta_B$

## Fig. 4b

Berechnet: aus $\Delta$ UAV : $\overline{UA}$
aus $\Delta$ UBV : $\overline{UB}$

Ausgang: $X_p$; $Y_p$: $\lambda$

$$\overline{UB} = \frac{\overline{UV}}{\sin(\alpha_B+\beta_B)} \cdot \sin(90^\circ-\beta_B)$$

$$\overline{UA} = \frac{\overline{UV}}{\sin(\alpha_A+\beta_A)} \cdot \sin(90^\circ-\beta_A)$$

$$X_A = \frac{\overline{UV}}{2} \cdot \left[ 1 + \frac{\sin(\alpha_A-\beta_A)}{\sin(\alpha_A+\beta_A)} \right]$$

$$Y_A = \frac{\overline{UV}}{2} \cdot \left[ \frac{\cos(\alpha_A+\beta_A)+\cos(\alpha_A-\beta_A)}{\sin(\alpha_A+\beta_A)} \right]$$

$$X_B = \frac{\overline{UV}}{2} \cdot \left[ 1 + \frac{\sin(\alpha_B-\beta_B)}{\sin(\alpha_B+\beta_B)} \right]$$

$$Y_B = \frac{\overline{UV}}{2} \cdot \left[ \frac{\cos(\alpha_B+\beta_B)+\cos(\alpha_B-\beta_B)}{\sin(\alpha_B+\beta_B)} \right]$$

$$X_p = \frac{X_A+X_B}{2} \qquad Y_p = \frac{Y_A+Y_B}{2}$$

$$\lambda = \text{arc tg } \frac{(Y_B-Y_A)}{(X_B-X_A)} \qquad \text{für} \quad X_A < X_B \quad Y_A < Y_B$$

$$\lambda = 180^\circ - \text{arc tg } \frac{(Y_B-Y_A)}{(X_A-X_B)} \qquad \text{für} \quad X_A > X_B \quad Y_A < Y_B$$

$$\lambda = 180^\circ + \text{arc tg } \frac{(Y_A-Y_B)}{(X_A-X_B)} \qquad \text{für} \quad X_A > X_B \quad Y_A > Y_B$$

$$\lambda = 360^\circ - \text{arc tg } \frac{(Y_A-Y_B)}{(X_B-X_A)} \qquad \text{für} \quad X_A < X_B \quad Y_A > Y_B$$

# Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 186 658 (THOMSON-CSF) * Abbildungen 1,2,4; Seite 3, Zeile 22 - Seite 5, Zeile 18; Seite 6, Zeile 8 - Seite 7, Zeile 11 * | 1,2 | G 01 S 5/16 G 01 S 1/70 |
| A | | 4-9 | |
| Y | GB-A-1 449 050 (THE AUSTRALIAN NATIONAL UNIVERSITY) * Abbildungen 1-4; Seite 3, Zeile 66 - Seite 4, Zeile 116 * | 1,2 | |
| A | | 4-9 | |
| Y | GB-A-1 466 471 (CETEC SYSTEMS LTD.) * Abbildungen 1,3,5; Seite 1, Zeile 80 - Seite 2, Zeile 130 * | 2 | RECHERCHIERTE SACHGEBIETE (Int. Cl.4) |
| A | | 4,6-8 | G 01 S G 01 B |
| A | US-A-3 924 107 (HIDEO SAKAI) | | |
| A | DE-A-2 622 030 (MEHNERT) | | |
| A | FR-A-2 093 168 (C.E.A.) | | |

Der vorliegende Recherchenbericht wurde für alle Patentansprüche erstellt.

| Recherchenort DEN HAAG | Abschlußdatum der Recherche 28-01-1985 | Prüfer CANNARD J.M. |
|---|---|---|